# EUROPEAN PATENT SPECIFICATION

(11) **EP 3 369 354 B1**
(45) Date of publication and mention of the grant of the patent: **08.12.2021**
(21) Application number: 18250007.4
(22) Date of filing: 31.01.2018
(51) Int. Cl.: A47J 47/10

(54) **NEGATIVE PRESSURE STORAGE CONTAINER**
UNTERDRUCKLAGERBEHÄLTER
RÉCIPIENT DE STOCKAGE À PRESSION NÉGATIVE

(30) Priority: 24.02.2017 TW 106202710 U
(43) Date of publication of application: 05.09.2018
(73) Proprietor: Shin Hung Yih Technology Co., Ltd., Taipei City (TW)
(72) Inventor: Ho, Yi-Hung, Taipei City (TW)
(74) Representative: Cabinet Chaillot

(56) References cited:
- WO-A1-2008/112093
- US-A- 5 806 575
- US-A1- 2004 256 021
- US-B1- 9 359 121

## Description

The present invention relates to storage container technology and more particularly, to a negative pressure storage container, which uses a rotary device to drive a vacuum pump in drawing air out of the container body, and the rotary device will run idle when a certain level of negative pressure is created in the container body, avoiding damage to the transmission gear set.

US Patent Number 9,296,542, issued to the present inventor, discloses a vacuum storage container, which includes a container housing, a drawer mounted in the container housing and movable between a closed position and an open position, a rotary knob pivotally mounted in a door cover of the drawer, clockwork coupled to the rotary knob, a drive gear affixed to the rotary knob, a transmission gear set rotatable by the drive gear, an eccentric wheel rotatable by the transmission gear set, a pumping pump mounted in the drawer and coupled to the eccentric wheel for creating a vacuum in the container housing, an ejection mechanism adapted for ejecting the drawer out of the container housing, and an operating member control mechanism adapted for locking the drawer to the container housing and operable to unlock the drawer for enabling the drawer to be ejected out of the container housing by the ejection mechanism. According to the aforesaid prior art mechanical type vacuum storage container, when the internal air of the container housing leaks out, the container housing cannot be automatically filled up with air.

There are electronic type negative pressure storage containers commercially available. However, if the internal air of an electronic type negative pressure storage container leaks out, a vacuum pumping operation must be performed again, bringing inconvenience. In US Patents US 5,806,575 and US2004/0256021 such containers are disclosed that have a lid with electric motor driven pump and with a vacuum detector comprising a springy balloon or a pressure button to detach a switch to cut power to the pump's electric motor when negative pressure in the container reaches a predetermined level.

### SUMMARY OF THE INVENTION

The present invention has been accomplished under the circumstances in view. It is therefore the main object of the present invention to provide a negative pressure storage container, which comprises a container cover, a container body, a rotary device, a gear transmission mechanism and a vacuum pump that are so configured that when the negative pressure created in the container body reaches a certain level, the bottom wall of the plastic inner cover member of the container cover is forced to curve in direction toward the inside of the container body, and thus, the transmission gear set of the gear transmission mechanism is moved with the deformed bottom wall of the inner cover member toward the inside of the container body to disengage the driving gear from the gear portion of the inner shaft of the rotary device; at this time, the rotary device runs idle and cannot drive the gear transmission mechanism to rotate, preventing overloading the transmission gear set and prolonging the service life of the gear transmission mechanism.

It is another object of the present invention to provide a negative pressure storage container, which is so configured that when a certain level of negative pressure is created in the container body, the storage food ingredients and eatable items in the container body can be maintained fresh.

It is still another object of the present invention to provide a negative pressure storage container, which is so configured that the relief valve rod comprises an internal passageway cutting through the opposing top and bottom ends thereof with a bottom end thereof disposed in communication with the bottom side of the relief channel of the inner cover member and a top end thereof fixedly mounted with a flexible end cap, thus, when a negative pressure is created in the container body, the flexible end cap is sucked by the negative pressure in the internal passageway to curve inwards, exhibiting a sign indicative of the presence of a negative pressure; the flexible end cap further comprises a top protruding portion located at the center of the top surface thereof and made of a different material with a different color relative to the flexible end cap, enhancing the negative pressure identification indication effect.

The present invention relates to a negative pressure storage container as defined in claim 1.

### BRIEF DESCRIPTION OF THE DRAWING

Fig. 1 is an exploded view of a negative pressure storage container in accordance with a first embodiment of the present invention.
Fig. 2 is an oblique bottom elevational view of the assembly of the outer cover member and the rotary device.
Fig. 3 is an oblique bottom elevational view of the assembly of the inner cover member and the inner plastic cushion member.
Fig. 4 is an exploded view of the container body and the container cover.
Fig. 5 is an oblique top elevational assembly view of the negative pressure storage container in accordance with the first embodiment of the present invention.
Fig. 6 is a sectional view, in an enlarged scale, of the negative pressure storage container in accordance with the first embodiment of the present invention.
Fig. 7 corresponds to Fig. 6, illustrating the bottom wall of the inner cover member curved toward the inside of the container body upon creation of a negative pressure in the container body.
Fig. 8 is an enlarged view of a part of the first embodiment of the present invention, illustrating the relationship between the gear transmission mechanism and the vacuum pump.
Fig. 9 is a schematic sectional view of a part of the first embodiment of the present invention, illustrating the structure of the vacuum pump.
Fig. 10 is a schematic sectional view of a part of the first embodiment of the present invention, illustrating the structure of the relief valve rod.
Fig. 11 corresponds to Fig. 11, illustrating a negative pressure created.
Fig. 12 corresponds to Fig. 11, illustrating the relief valve rod pressed down, the flexible end cap curved inwards.
Fig. 13 is an oblique bottom exploded view of a part of the first embodiment of the present invention, illustrating the relationship between the dustproof covers and dustproof nets and the suction hole and relief channel of the inner cover member of the container cover.
Fig. 14 is an oblique top elevational view of a part of a negative pressure storage container in accordance with a second embodiment of the present invention.
Fig. 15 is a schematic sectional assembly view of the negative pressure storage container in accordance with the second embodiment of the present invention.
Fig. 16 is a schematic sectional view of the second embodiment of the present invention, illustrating the structure of the relief valve rod.
Fig. 17 is a schematic sectional view of the second embodiment of the present invention, illustrating the structure of the vacuum pump and the surrounding component parts.
Fig. 18 is a block diagram of the motor module, power supply module and switch control module of the negative pressure storage container in accordance with a second embodiment of the present invention.

### DETAILED DESCRIPTION OF THE INVENTION

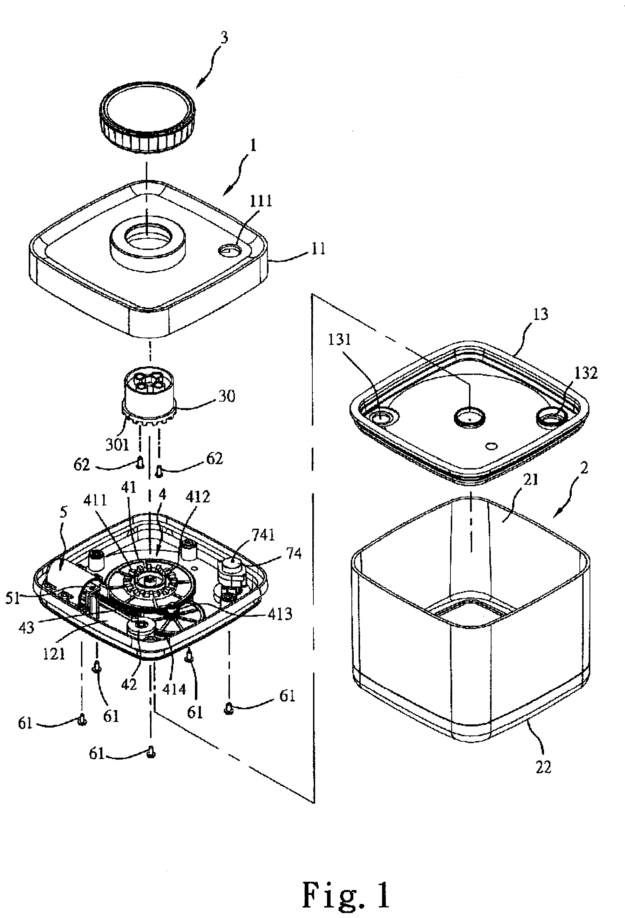

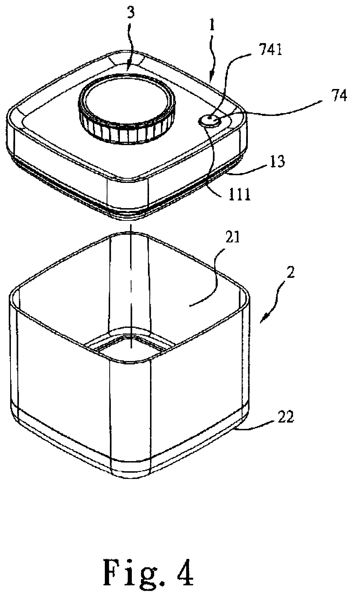

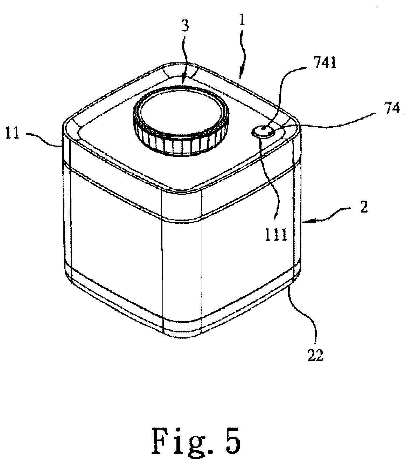

Referring to Figs. 1-8, a negative pressure storage container in accordance with a first embodiment of the present invention is shown. The negative pressure storage container of this first embodiment comprises a container cover 1, a container body 2, a rotary device 3, a gear transmission mechanism 4, and a vacuum pump 5.

The container body 2 defines therein a storage chamber with an open side 21 for storing foods, having a bottom surface thereof mounted with an anti-slip pad 22.

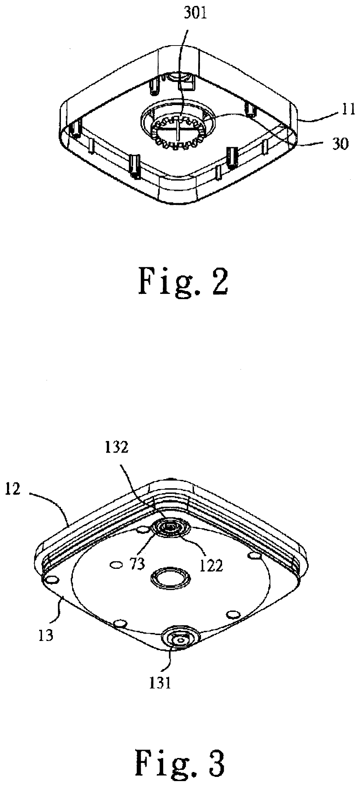

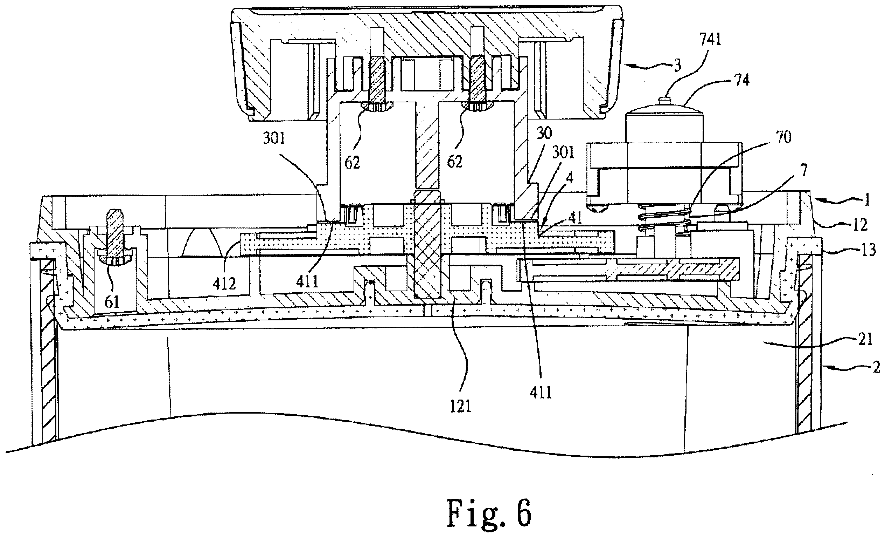

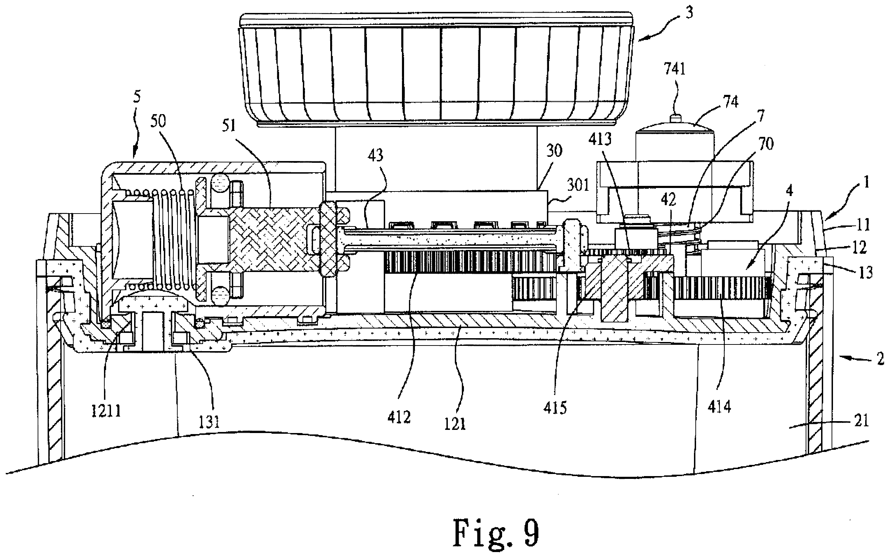

The container cover 1 covers the container body 2, comprising an outer cover member 11, an inner cover member 12 and an inner plastic cushion member 13. The outer cover member 11 and the inner cover member 12 are fastened together by first fastening members 61 (see Fig. 1 and Fig. 6), or by means of grooves (not shown) and tenons (not shown). The inner cover member 12 is made of a plastic material, having a top side thereof fastened to the outer cover member 11 and an opposing bottom side thereof fastened to the inner plastic cushion member 13 (see Fig. 3 and Figs. 10 and 11). Further, the inner cover member 12 has a suction hole 1211 located on a bottom wall 121 thereof (see Fig. 9). The inner plastic cushion member 13 has a suction through hole 131 (see Fig. 1 and Fig. 9) corresponding to the suction hole 1211. After covered the container cover 1 on the container body 2, the suction hole 1211 is kept in communication with the inside space of the container body 2.

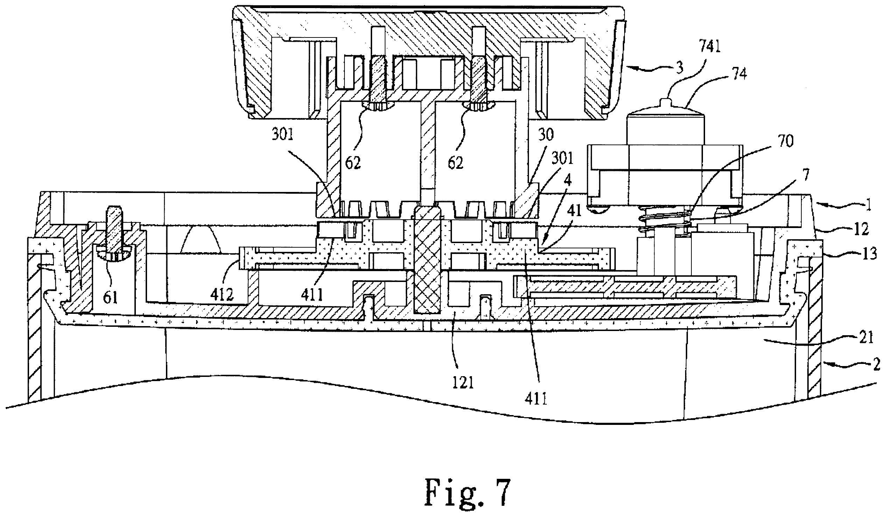

The rotary device 3 in this first embodiment is a rotary knob rotatably connected to the outer cover member 11 of the container cover 1, having an inner shaft 30 fixedly fastened to a bottom end thereof by second fastening members 62 (see Fig. 6 and Fig. 7). The inner shaft 30 has a gear portion 301 located at a distal end thereof and suspending inside the outer cover member 11. The gear portion 301 of the inner shaft 30 is adapted for driving the gear transmission mechanism 4.

The gear transmission mechanism 4 is mounted at the bottom wall 121 of the inner cover member 12 of the container cover 1, comprising a transmission gear set 41, an eccentric wheel 42 and a link 43. The transmission gear set 41 comprises a driving gear 411 meshed with the gear portion 301 of the inner shaft 30 of the rotary device (rotary knob) 3 so that rotating the rotary device (rotary knob) 3 drives the transmission gear set 41 to rotate the eccentric wheel 42. The eccentric wheel 42 is eccentrically and pivotally connected to one end of the link 43. The opposite end of the link 43 is pivotally connected to the reciprocating piston 51 of the vacuum pump 5.

The vacuum pump 5 is mounted at the bottom wall 121 of the inner cover member 12 of the container cover 1 and disposed in communication with the suction hole 1211 of the inner cover member 12 (see Fig. 9). The reciprocating piston 51 of the vacuum pump 5 is driven by the gear transmission mechanism 4 to reciprocate, drawing air out of the container body 2. Further, a balance spring 50 is mounted between the reciprocating piston 51 and the vacuum pump 5 (see Fig. 9) to balance the reciprocating motion of the reciprocating piston 51. In the suction action during the reciprocating motion, the load is heavy. On the contrary, in the return action during the reciprocating motion, the load is light. Subject to the arrangement of the balance spring 50, the user's hand can feel smooth when rotating the rotary device (rotary knob) 3.

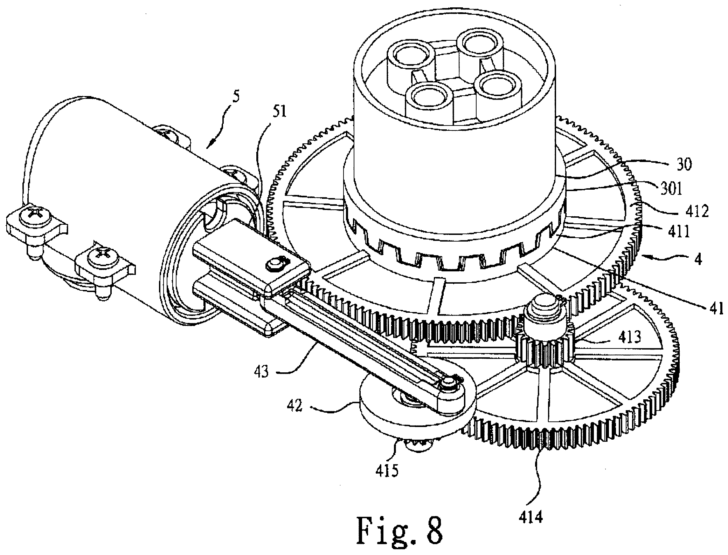

As illustrated in Fig. 6 and Fig. 8, when a user rotates the rotary device (rotary knob) 3, the gear portion 301 of the inner shaft 30 is forced to drive the driving gear 411, thereby rotating the transmission gear set 41 of the gear transmission mechanism 4 (see Fig. 6 and Fig. 8). During rotation of the transmission gear set 41, the eccentric wheel 42 is driven to move the link 43, causing reciprocation of the reciprocating piston 51 to draw air out of the container body 2, and thus, a negative pressure is created in the container body 2. When the negative pressure in the container body 2 reaches a certain level, the bottom wall 121 of the plastic inner cover member 12 of the container cover 1 is forced to curve in direction toward the inside of the container body 2 (see Fig. 7), and thus, the transmission gear set 41 of the gear transmission mechanism 4 is moved with the deformed bottom wall 121 of the inner cover member 12 toward the inside of the container body 2 (see Fig. 7) to disengage the driving gear 411 from the gear portion 301 of the inner shaft 30 of the rotary device (rotary knob) 3. At this time, the rotary device (rotary knob) 3 runs idle and cannot drive the gear transmission mechanism 4 to rotate, preventing overloading the transmission gear set 41 and prolonging the service life of the gear transmission mechanism 4.

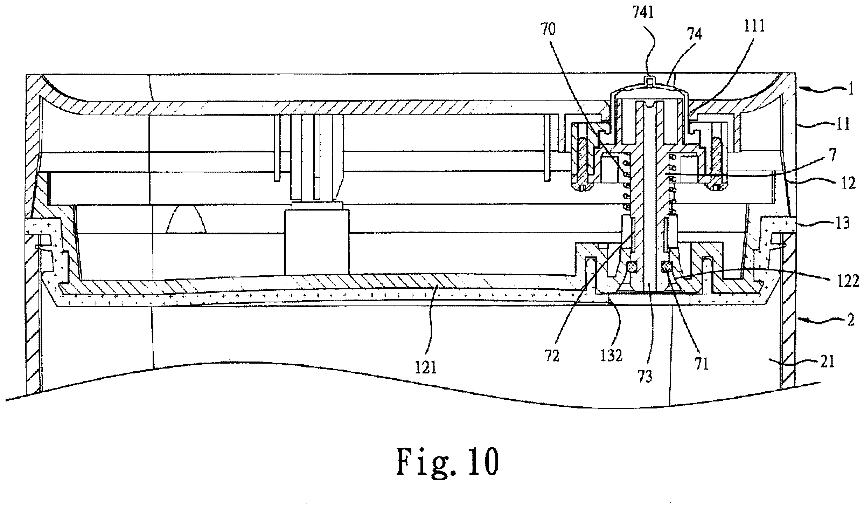

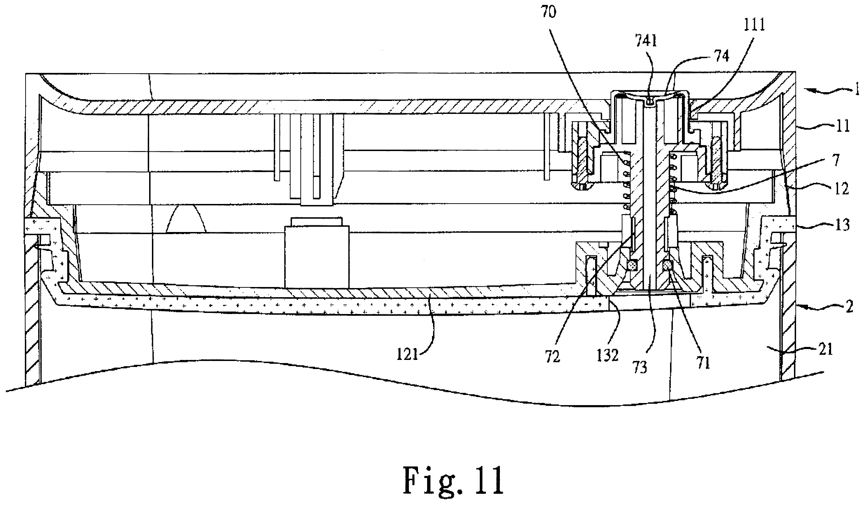

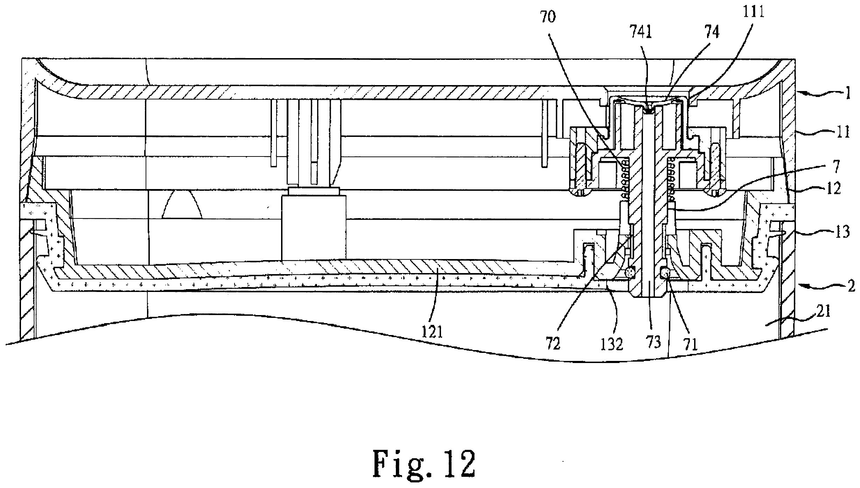

Further, the inner cover member 12 of the container cover 1 comprises an relief channel 122 (see Fig. 10) located on the bottom wall 121 thereof; the inner plastic cushion member 13 of the container cover 1 further comprises an relief hole 132 disposed in communication with the relief channel 122 (see Fig. 1 and Fig. 10). Further, a sealing pad 71 is mounted on an relief valve rod 7 (see Figs. 10-12) and movable with the relief valve rod 7 upwardly to block the relief channel 122 of the inner cover member 12 (see Fig. 10), or downwardly away from the relief channel 122 of the inner cover member 12 to open the passage (see Fig. 12). The relief valve rod 7 has the top end thereof inserted through a positioning hole 111 on the outer cover member 11. Further, an elastic member 70 is mounted between the relief valve rod 7 and the relief channel 122 of the inner cover member 12 to support the relief valve rod 7, holding the relief valve rod 7 in the position where the sealing pad 71 blocks the relief channel 122 of the inner cover member 2 when a negative pressure is created in the container body 2 (see Fig. 11). Further, the relief valve rod 7 comprises an external passageway 72. When the relief valve rod 7 is pressed down by an external force (see Fig. 12), the external passageway 72 reliefs gas through the gap between the sealing pad 71 and the relief channel 122 of the inner cover member 12. When the external force is released from the relief valve rod 7, the elastic member 70 immediately pushes the relief valve rod 7 upward (see Fig. 10), forcing the sealing pad 71 to block the relief channel 122. The relief valve rod 7 further comprises an internal passageway 73 cutting through the opposing top and bottom ends thereof (see Figs. 10-12). The bottom end of the internal passageway 73 is disposed in communication with the bottom side of the relief channel 122 of the inner cover member 12. Further, a flexible end cap 74 is fixedly mounted on the top end of the relief valve rod 7 (see Figs. 10-12). When a negative pressure is created in the container body 2, the flexible end cap 74 is sucked by the negative pressure in the internal passageway 73 to curve inwards (see Fig. 11), exhibiting a sign indicative of the presence of a negative pressure. The flexible end cap 74 further comprises a top protruding portion 741 located at the center of the top surface thereof. The top protruding portion 741 can be made of a different material with a different color relative to the flexible end cap 74, enhancing the negative pressure identification indication effect.

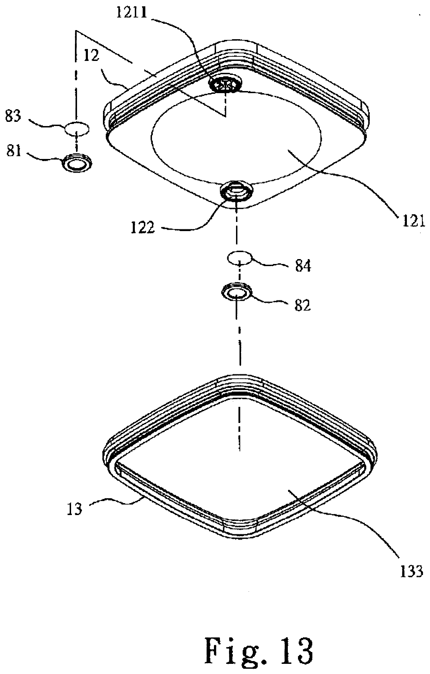

Further, as illustrated in Fig. 13, the suction hole 1211 and relief channel 122 on the bottom wall 121 of the inner cover member 12 of the container cover 1 are respectively mounted with respective dustproof covers 81,82 and respective dustproof nets 83,84, preventing powder ingredients in the container body 2 from affecting the airtight effect or product service life. Further, the dustproof covers 81,82 and the dustproof nets 83,84 are detachable, facilitating washing or replacement. Further, in order to facilitate the mounting and dismounting of the dustproof covers 81,82 and dustproof nets 83,84, the inner plastic cushion member 13 is configured to provide an opening 133.

Further, in this embodiment, the gear portion 301 of the inner shaft 30 at the rotary device (rotary knob) 3 is meshed with the driving gear 411 of the transmission gear set 41 of the gear transmission mechanism 4. The transmission gear set 41 further comprises a large gear 412 coaxially mounted at a bottom side of the driving gear 411, a first small gear 413 meshed with the large gear 412, an intermediate gear 414 coaxially connected to the first small gear 413, and a second small gear 415 meshed with the intermediate gear 414. The aforesaid eccentric wheel 42 is coaxially connected to the second small gear 415 and pivotally coupled to the one end of the link 43 in an eccentric manner. The other end of the link 43 is pivotally coupled to the reciprocating piston 51. Thus, when the rotary device (rotary knob) 3 is being rotated, the gear portion 301 of the inner shaft 30 is driven to rotate the driving gear 411 and the large gear 412, causing the large gear 412 to rotate the first small gear 413 and the intermediate gear 414, and the second small gear 415 is then driven by the intermediate gear 414 to rotate the eccentric wheel 42, driving the link 43 to reciprocate the reciprocating piston 51.

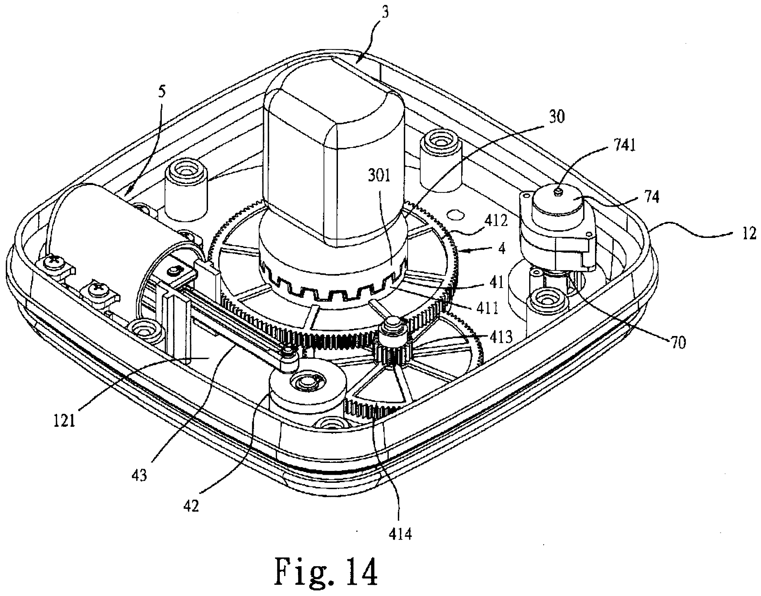

Referring to Figs. 14-18, a negative pressure storage container in accordance with a second embodiment of the present invention is shown. In this second embodiment, a motor module is used to substitute for the rotary device 3 in the aforesaid first embodiment. The other technical features of this second embodiment are substantially same as the aforesaid first embodiment. The negative pressure storage container of this second embodiment comprises a container cover 1, a container body 2, a rotary device 3, a gear transmission mechanism 4, and a vacuum pump 5.

The container body 2 defines therein a storage chamber with an open side 21 for storing foods, having a bottom surface thereof mounted with an anti-slip pad 22.

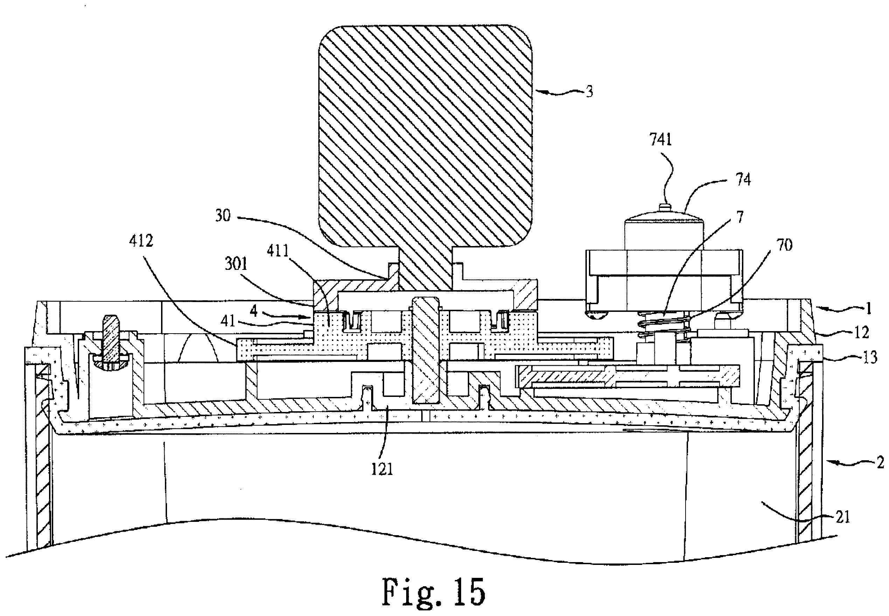

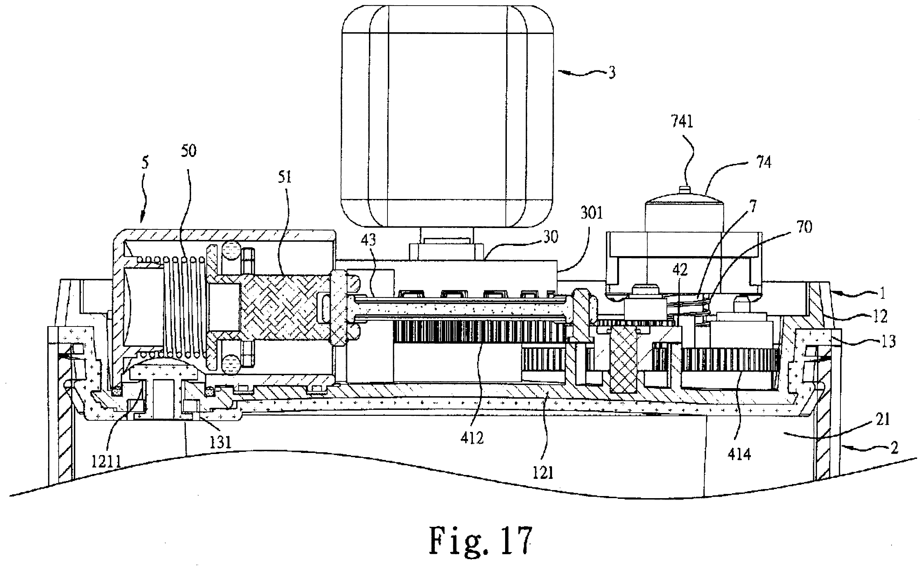

The container cover 1 covers the container body 2 (see Figs. 15-17), comprising an outer cover member 11, an inner cover member 12 and an inner plastic cushion member 13. The outer cover member 11 and the inner cover member 12 are fastened together. The inner cover member 12 is made of a plastic material, having a top side thereof fastened to the outer cover member 11 and an opposing bottom side thereof fastened to the inner plastic cushion member 13. Further, the inner cover member 12 has a suction hole 1211 located on a bottom wall 121 thereof (see Fig. 17). The inner plastic cushion member 13 has a suction through hole 131 (see Fig. 17) corresponding to the suction hole 1211. After covered the container cover 1 on the container body 2, the suction hole 1211 is kept in communication with the inside space of the container body 2.

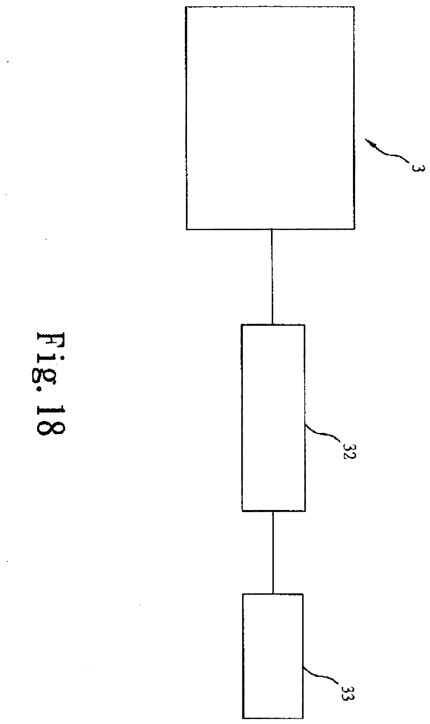

The rotary device 3 in this second embodiment is a motor module, having an inner shaft 30 coupled thereto. The inner shaft 30 has a gear portion 301 located at a distal end thereof and suspending inside the outer cover member 11. The gear portion 301 of the inner shaft 30 is adapted for driving the gear transmission mechanism 4. As illustrated in Fig. 18, the rotary device (motor module) 3 is electrically coupled to a power supply module 32 (for example, battery set). The power supply module 32 is electrically coupled to a switch control module 33 that controls on/off of the rotary device (motor module) 3.

The gear transmission mechanism 4 is mounted at the bottom wall 121 of the inner cover member 12 of the container cover 1, comprising a transmission gear set 41, an eccentric wheel 42 and a link 43. The transmission gear set 41 comprises a driving gear 411 meshed with the gear portion 301 of the inner shaft 30 of the rotary device (motor module) 3 so that rotating the rotary device (motor module) 3 drives the transmission gear set 41 to rotate the eccentric wheel 42. The eccentric wheel 42 is eccentrically and pivotally connected to one end of the link 43. The opposite end of the link 43 is pivotally connected to the reciprocating piston 51 of the vacuum pump 5.

The vacuum pump 5 is mounted at the bottom wall 121 of the inner cover member 12 of the container cover 1 and disposed in communication with the suction hole 1211 of the inner cover member 12 (see Fig. 17). The reciprocating piston 51 of the vacuum pump 5 is driven by the gear transmission mechanism 4 to reciprocate, drawing air out of the container body 2. Further, a balance spring 50 is mounted between the reciprocating piston 51 and the vacuum pump 5 (see Fig. 17) to balance the reciprocating motion of the reciprocating piston 51. In the suction action during the reciprocating motion, the load is heavy. On the contrary, in the return action during the reciprocating motion, the load is light. Subject to the arrangement of the balance spring 50, the user's hand can feel smooth when rotating the rotary device (rotary knob) 3.

When the rotary device (motor module) 3 is started up, the gear portion 301 of the inner shaft 30 is forced to drive the driving gear 411, thereby rotating the transmission gear set 41 of the gear transmission mechanism 4. During rotation of the transmission gear set 41, the eccentric wheel 42 is driven to move the link 43, causing reciprocation of the reciprocating piston 51 to draw air out of the container body 2, and thus, a negative pressure is created in the container body 2. When the negative pressure in the container body 2 reaches a certain level, the bottom wall 121 of the plastic inner cover member 12 of the container cover 1 is forced to curve in direction toward the inside of the container body 2, and thus, the transmission gear set 41 of the gear transmission mechanism 4 is moved with the deformed bottom wall 121 of the inner cover member 12 toward the inside of the container body 2 to disengage the driving gear 411 from the gear portion 301 of the inner shaft 30 of the rotary device (motor module) 3. At this time, the rotary device (motor module) 3 runs idle and cannot drive the gear transmission mechanism 4 to rotate, preventing overloading the transmission gear set 41 and prolonging the service life of the gear transmission mechanism 4.

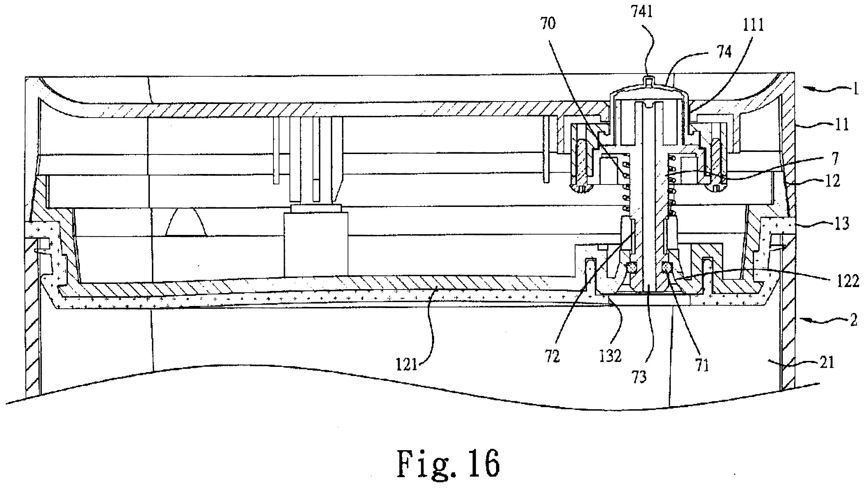

Further, as illustrated in Fig. 16, the inner cover member 12 of the container cover 1 comprises an relief channel 122 located on the bottom wall 121 thereof; the inner plastic cushion member 13 of the container cover 1 further comprises an relief hole 132 disposed in communication with the relief channel 122. Further, a sealing pad 71 is mounted on an relief valve rod 7 and movable with the relief valve rod 7 upwardly to block the relief channel 122 of the inner cover member 12, or downwardly away from the relief channel 122 of the inner cover member 12 to open the passage. The relief valve rod 7 has the top end thereof inserted through a positioning hole 111 on the outer cover member 11. Further, an elastic member 70 is mounted between the relief valve rod 7 and the relief channel 122 of the inner cover member 12 to support the relief valve rod 7, holding the relief valve rod 7 in the position where the sealing pad 71 blocks the relief channel 122 of the inner cover member 2 when a negative pressure is created in the container body 2. Further, the relief valve rod 7 comprises an external passageway 72. When the relief valve rod 7 is pressed down by an external force, gas is reliefed from the external passageway 72 through the gap between the sealing pad 71 and the relief channel 122 of the inner cover member 12. When the external force is released from the relief valve rod 7, the elastic member 70 immediately pushes the relief valve rod 7 upward, forcing the sealing pad 71 to block the relief channel 122. The relief valve rod 7 further comprises an internal passageway 73 cutting through the opposing top and bottom ends thereof. The bottom end of the internal passageway 73 is disposed in communication with the bottom side of the relief channel 122 of the inner cover member 12. Further, a flexible end cap 74 is fixedly mounted on the top end of the relief valve rod 7. When a negative pressure is created in the container body 2, the flexible end cap 74 is sucked by the negative pressure in the internal passageway 73 to curve inwards, exhibiting a sign indicative of the presence of a negative pressure. The flexible end cap 74 further comprises a top protruding portion 741 located at the center of the top surface thereof. The top protruding portion 741 can be made of a different material with a different color relative to the flexible end cap 74, enhancing the negative pressure identification indication effect.

In conclusion, the invention has the features and effects as follows:
1. When the negative pressure created in the container body 2 reaches a certain level, the bottom wall 121 of the plastic inner cover member 12 of the container cover 1 is forced to curve in direction toward the inside of the container body 2 (see Fig. 7), and thus, the transmission gear set 41 of the gear transmission mechanism 4 is moved with the deformed bottom wall 121 of the inner cover member 12 toward the inside of the container body 2 (see Fig. 7) to disengage the driving gear 411 from the gear portion 301 of the inner shaft 30 of the rotary device (rotary knob) 3; at this time, the rotary device (rotary knob) 3 runs idle and cannot drive the gear transmission mechanism 4 to rotate, preventing overloading the transmission gear set 41 and prolonging the service life of the gear transmission mechanism 4.
2. When a certain level of negative pressure is created in the container body 2, the storage food ingredients and eatable items in the container body 2 can be maintained fresh.
3. The relief valve rod 7 comprises an internal passageway 73 cutting through the opposing top and bottom ends thereof with a bottom end thereof disposed in communication with the bottom side of the relief channel 122 of the inner cover member 12 and a top end thereof fixedly mounted with a flexible end cap 74, thus, when a negative pressure is created in the container body 2, the flexible end cap 74 is sucked by the negative pressure in the internal passageway 73 to curve inwards, exhibiting a sign indicative of the presence of a negative pressure; the flexible end cap 74 further comprises a top protruding portion 741 located at the center of the top surface thereof and made of a different material with a different color relative to the flexible end cap 74, enhancing the negative pressure identification indication effect.

## Claims

1. A negative pressure storage container, comprising:
a container body (2) comprising a storage chamber with an open side and a an anti-slip pad (22) mounted on a bottom surface thereof;
a container cover (1) covering said container body (2), said container cover (1) comprising an outer cover member (11) and an inner cover member (12), said outer cover member (11) and said inner cover member (12) being fastened together, said inner cover member (12) having a top side thereof fastened to said outer cover member (11), said inner cover member (12) comprising a suction hole located on a bottom wall (121) thereof, which is disposed in communication with the inside space of said container body (2) after said container cover (1) is covered on said container body (2);
a rotary device (3) rotatably connected to said outer cover member (11) of said container cover (1), said rotary device comprising an inner shaft (30) fixedly fastened to a bottom end thereof and a gear portion (301) located at a distal end of said inner shaft (30) and suspending inside said outer cover member (11) and adapted for driving a gear transmission mechanism (4);
a gear transmission mechanism (4) mounted at said bottom wall (121) of said inner cover member (12) of said container cover (1), said gear transmission mechanism (4) comprising a transmission gear set (41), an eccentric wheel (42) and a link (43), said transmission gear set (41) comprises a driving gear (411) meshed with said gear portion (301) of said inner shaft (30) of said rotary device (3) and drivable by said rotary device (3) to rotate said eccentric wheel (42), said eccentric wheel (42) being eccentrically and pivotally connected to one end of said link (43), said link (43) having an opposite end thereof pivotally connected to a reciprocating piston (51) of a vacuum pump (5);
a vacuum pump (5) mounted at said bottom wall (121) of said inner cover member (12) of said container cover (1) and disposed in communication with said suction hole (1211) of said inner cover member (12), said vacuum pump (5) comprising a reciprocating piston (51) drivable by said gear transmission mechanism (4) to reciprocate and to further draw air out of said container body (2); and
wherein when said rotary device (3) is rotated by an external force, said gear portion (301) of said inner shaft (30) is forced to rotate said driving gear (411) and then said transmission gear set (41) of said gear transmission mechanism (4), causing said eccentric wheel (42) to move said link (43) and to further reciprocate said reciprocating piston (51) in drawing air out of said container body (2), and thus, a negative pressure is created in said container body (2);
**characterized in that** said container cover (1) further comprises an inner plastic cushion member (13), said inner cover member (12) being made of a plastic material and having a bottom side thereof fastened to said inner plastic cushion member (13), said inner plastic cushion member (13) comprising a suction through hole (1211), which is disposed in communication with the inside space of said container body (2) after said container cover (1) is covered on said container body (2); there being a balance spring (50) mounted between said reciprocating piston (51) and said vacuum pump (5); and
wherein when the negative pressure in said container body (2) reaches a predetermined level, said bottom wall (121) of said plastic inner cover member (12) of said container cover (1) is forced to curve in direction toward the inside of said container body (2), and thus, said transmission gear set (41) of said gear transmission mechanism (4) is configured to be moved with the deformed said bottom wall (121) of said inner cover member (12) toward the inside of said container body (2) to disengage said driving gear (411) from said gear portion (301) of said inner shaft (30) of said rotary device (3), enabling said rotary device (3) to run idle.

2. The negative pressure storage container as claimed in claim 1, wherein said inner cover member (12) comprising a suction hole (1211) and an relief channel (122) respectively located on a bottom wall (121) thereof, said inner plastic cushion member (13) comprising a suction through hole (131), which is disposed in communication with the inside space of said container body (2) after said container cover (1) is covered on said container body (2); and an relief hole for communication with said relief channel (122), and said outer cover member (11) comprises a positioning hole (111); said relief valve rod (7) has an opposing top end thereof upwardly inserted through said positioning hole (111) of said outer cover member (11); said container cover (1) further comprises an elastic member (70) mounted between said relief valve rod (7) and said relief channel (122) of said inner cover member (12) to support said relief valve rod (7) in the position where said sealing pad (71) seals said relief channel (122) of said inner cover member (12) upon creation of a negative pressure in said container body (2); said relief valve rod (7) comprises an external passageway (72) so arranged that when said relief valve rod (7) is pressed down by an external force, said external passageway (72) reliefs gas through the gap between said sealing pad (71) and said relief channel (122) of said inner cover member (12) and, when the external force is released from said relief valve rod (7), said elastic member (70) immediately pushes said relief valve rod (7) upward, forcing said sealing pad (71) to seal said relief channel (122); said relief valve rod (7) further comprises an internal passageway (73) cutting through the opposing top and bottom ends thereof, said internal passageway (73) having a bottom end thereof disposed in communication with a bottom side of said relief channel (122) of said inner cover member (12) and a top end thereof fixedly mounted with a flexible end cap (74), said flexible end cap (74) being so configured that when a negative pressure is created in said container body (2), said flexible end cap (74) is sucked by said negative pressure to curve inwards, exhibiting a sign indicative of the presence of said negative pressure.

3. The negative pressure storage container as claimed in claim 2, wherein said flexible end cap (74) comprises a top protruding portion (741) located at the center of a top surface thereof.

4. The negative pressure storage container as claimed in claim 1, wherein said rotary device (3) comprises a rotary knob (3) rotatably mounted in said outer cover member (11) of said container cover (1) and fixedly connected with said inner shaft (30).

5. The negative pressure storage container as claimed in claim 1, wherein said rotary device (3) comprises a motor module (3) coupled with said inner shaft (30), a power supply module (32) electrically coupled to said motor module (3), and a switch control module (33) electrically coupled to said power supply module (32) for controlling on/off of said motor module.

6. The negative pressure storage container as claimed in claim 1, wherein said inner cover member (12) comprising a relief channel (122) located on a bottom wall (121) thereof, said inner plastic cushion member (13) comprising an relief hole for communication with said relief channel (122); and
the negative pressure storage container further comprising a relief valve rod (7) having a sealing pad (71) located at a bottom end thereof, said relief valve rod (7) being mounted in said outer cover member (11) and movable relative to said outer cover member (11) being a closed position where said sealing pad (71) seals said relief channel (122) and an open position where said sealing pad (71) is moved away from said relief channel (122) for allowing communication between said relief channel (122) and said relief hole (132).

7. The negative pressure storage container as claimed in claim 6, wherein said outer cover member (11) comprises a positioning hole (111); said relief valve rod (7) has an opposing top end thereof upwardly inserted through said positioning hole (111) of said outer cover member (11); said container cover (1) further comprises an elastic member (70) mounted between said relief valve rod (7) and said relief channel (122) of said inner cover member (12) to support said relief valve rod (7) in the position where said sealing pad (71) seals said relief channel (122) of said inner cover member (12) upon creation of a negative pressure in said container body (2); said relief valve rod (7) comprises an external passageway (72) so arranged that when said relief valve rod (7) is pressed down by an external force, said external passageway (72) reliefs gas through the gap between said sealing pad (71) and said relief channel (122) of said inner cover member (12) and, when the external force is released from said relief valve rod (7), said elastic member (70) immediately pushes said relief valve rod (7) upward, forcing said sealing pad (71) to seal said relief channel (122); said relief valve rod (7) further comprises an internal passageway (730 cutting through the opposing top and bottom ends thereof, said internal passageway (73) having a bottom end thereof disposed in communication with a bottom side of said relief channel (122) of said inner cover member (12) and a top end thereof fixedly mounted with a flexible end cap (74), said flexible end cap (74) being so configured that when a negative pressure is created in said container body (2), said flexible end cap (74) is sucked by said negative pressure to curve inwards, exhibiting a sign indicative of the presence of said negative pressure.

8. The negative pressure storage container as claimed in claim 7, wherein said flexible end cap (74) comprises a top protruding portion located at the center of a top surface thereof.

9. The negative pressure storage container as claimed in claim 6, wherein said rotary device (3) comprises a rotary knob (3) rotatably mounted in said outer cover member (11) of said container cover (1) and fixedly connected with said inner shaft (30).

10. The negative pressure storage container as claimed in claim 6, wherein said rotary device (3) comprises a motor module (3) coupled with said inner shaft (30), a power supply module (32) electrically coupled to said motor module (3), and a switch control module (33) electrically coupled to said power supply module (32) for controlling on/off of said motor module (3).

11. The negative pressure storage container as claimed in claim 6, wherein said transmission gear set (41) further comprises a large gear (412) coaxially mounted at a bottom side of said driving gear (411), a first small gear (413) meshed with said large gear (412), an intermediate gear (414) coaxially connected to said first small gear (413), and a second small gear (415) meshed with said intermediate gear (414); said eccentric wheel (42) is coaxially connected to said second small gear (415) and pivotally coupled to the one end of said link (43) in an eccentric manner, said link (43) has the opposite end thereof pivotally coupled to said reciprocating piston (51), and thus, when said rotary device (3) is being rotated, said gear portion (301) of said inner shaft (12) is driven to rotate said driving gear (411) and said large gear (412), causing said large gear (412) to rotate said first small gear (413) and said intermediate gear (414), and said second small gear (415) is then driven by said intermediate gear (414) to rotate said eccentric wheel (42), driving said link (43) to reciprocate said reciprocating piston (51).

## Patentansprüche

1. Unterdrucklagerbehälter, der Folgendes umfasst:
einen Behälterkörper (2), der eine Lagerkammer mit einer offenen Seite und ein auf einer Bodenfläche desselben angebrachtes Antirutschkissen (22) umfasst;
einen Behälterdeckel (1), die den Behälterkörper (2) abdeckt, wobei der Behälterdeckel (1) ein äußeres Deckelelement (11) und ein inneres Deckelelement (12) umfasst, wobei das äußere Deckelelement (11) und das innere Deckelelement (12) aneinander befestigt sind, wobei das innere Deckelelement (12) eine Oberseite aufweist, die an dem äußeren Deckelelement (11) befestigt ist, das innere Deckelelement (12) ein Saugloch aufweist, das sich an einer Bodenwand (121) desselben befindet und in Verbindung mit dem Innenraum des Behälterkörpers (2) angeordnet ist, nachdem der Behälterdeckel (1) auf dem Behälterkörper (2) abgedeckt ist;
eine Drehvorrichtung (3), die drehbar mit dem äußeren Deckelelement (11) des Behälterdeckels (1) verbunden ist, wobei die Drehvorrichtung eine innere Welle (30), die fest an einem unteren Ende davon befestigt ist, und einen gezahnten Abschnitt (301) umfasst, der sich an einem distalen Ende der inneren Welle (30) befindet und innerhalb des äußeren Deckelelements (11) aufgehängt ist und zum Antrieb eines Zahnradgetriebemechanismus (4) geeignet ist;
einen Zahnradgetriebemechanismus (4), der an der Bodenwand (121) des inneren Deckelelements (12) des Behälterdeckels (1) angebracht ist, wobei der Zahnradgetriebemechanismus (4) einen Getriebezahnradsatz (41), ein Exzenterrad (42) und ein Verbindungsglied (43) umfasst, der Getriebezahnradsatz (41) ein Antriebszahnrad (411) umfasst, das mit dem gezahnten Abschnitt (301) der inneren Welle (30) der Drehvorrichtung (3) in Eingriff steht und durch die Drehvorrichtung (3) angetrieben werden kann, um das Exzenterrad (42) zu drehen, wobei das Exzenterrad (42) exzentrisch und schwenkbar mit einem Ende des Verbindungsglieds (43) verbunden ist, wobei ein gegenüberliegendes Ende des Verbindungsglieds (43) schwenkbar mit einem hin- und hergehenden Kolben (51) einer Vakuumpumpe (5) verbunden ist;
eine Vakuumpumpe (5), die an der Bodenwand (121) des inneren Deckelelements (12) des Behälterdeckels (1) angebracht und in Verbindung mit dem Saugloch (1211) des inneren Deckelelements (12) angeordnet ist, wobei die Vakuumpumpe (5) einen hin- und hergehenden Kolben (51) umfasst, der durch den Zahnradgetriebemechanismus (4) angetrieben werden kann, um sich hin- und herzubewegen und weiter Luft aus dem Behälterkörper (2) zu ziehen; und
wobei, wenn die Drehvorrichtung (3) durch eine äußere Kraft gedreht wird, der gezahnte Abschnitt (301) der inneren Welle (30) gezwungen wird, das Antriebszahnrad (411) und dann den Getriebezahnradsatz (41) des Zahnradgetriebemechanismus (4) zu drehen, was das Exzenterrad (42) veranlasst, das Verbindungsglied (43) zu bewegen und durch Luftabsaugen aus dem Behälterkörper (2) den hin- und hergehenden Kolben (51) weiter hin- und herzubewegen, und somit ein Unterdruck in dem Behälterkörper (2) erzeugt wird;
**dadurch gekennzeichnet, dass** der Behälterdeckel (1) ferner ein inneres Kunststoffpolsterelement (13) umfasst, wobei das innere Deckelelement (12) aus einem Kunststoffmaterial hergestellt ist und eine Unterseite davon an dem inneren Kunststoffpolsterelement (13) befestigt ist, wobei das innere Kunststoffpolsterelement (13) ein Saugdurchgangsloch (1211) umfasst, das in Verbindung mit dem Innenraum des Behälterkörpers (2) angeordnet ist, nachdem der Behälterdeckel (1) auf dem Behälterkörper (2) abgedeckt ist; wobei eine Ausgleichsfeder (50) zwischen dem hin- und hergehenden Kolben (51) und der Vakuumpumpe (5) angebracht ist; und wobei, wenn der Unterdruck in dem Behälterkörper (2) ein vorbestimmtes Niveau erreicht, die Bodenwand (121) des inneren Deckelelements (12) aus Kunststoff des Behälterdeckels (1) gezwungen wird, sich in Richtung der Innenseite des Behälterkörpers (2) zu krümmen, und somit der Getriebezahnradsatz (41) des Zahnradgetriebemechanismus (4) so konfiguriert ist, dass er mit der verformten Bodenwand (121) des inneren Deckelelements (12) in Richtung der Innenseite des Behälterkörpers (2) bewegt wird, um das Antriebszahnrad (411) von dem gezahnten Abschnitt (301) der inneren Welle (30) der Drehvorrichtung (3) zu lösen, wodurch die Drehvorrichtung (3) im Leerlauf laufen kann.

2. Unterdrucklagerbehälter nach Anspruch 1, wobei das innere Deckelelement (12) ein Saugloch (1211) und einen Entlastungskanal (122) aufweist, die jeweils an einer Bodenwand (121) desselben angeordnet sind, wobei das innere Kunststoffpolsterelement (13) ein Saugdurchgangsloch (131), das in Verbindung mit dem Innenraum des Behälterkörpers (2) angeordnet ist, nachdem der Behälterdeckel (1) auf dem Behälterkörper (2) abgedeckt ist; und ein Entlastungsloch zur Verbindung mit dem Entlastungskanal (122) aufweist, und wobei das äußere Deckelelement (11) ein Positionierungsloch (111) aufweist; die Entlastungventilstange (7) ein gegenüberliegendes oberes Ende aufweist, das nach oben durch die Positionierungsloch (111) des äußeren Deckelelements (11) eingeführt ist; der Behälterdeckel (1) ferner ein elastisches Element (70) aufweist, das zwischen der Entlastungventilstange (7) und dem Entlastungskanal (122) des inneren Deckelelements (12) angebracht ist, um die Entlastungventilstange (7) in der Position zu halten, in der das Dichtungskissen (71) den Entlastungskanal (122) des inneren Deckelelements (12) abdichtet, wenn ein Unterdruck in dem Behälterkörper (2) erzeugt wird; die Entlastungsventilstange (7) einen äußeren Durchgang (72) aufweist, der so angeordnet ist, dass, wenn die Entlastungsventilstange (7) durch eine äußere Kraft nach unten gedrückt wird, der äußere Durchgang (72) Gas durch den Spalt zwischen dem Dichtungskissen (71) und dem Entlastungskanal (122) des inneren Deckelelements (12) entlastet, und, wenn die äußere Kraft von der Entlastungsventilstange (7) aufgehoben wird, das elastische Element (70) die Entlastungsventilstange (7) sofort nach oben drückt und somit das Dichtungskissen (71) zwingt, den Entlastungskanal (122) abzudichten; die Entlastungsventilstange (7) ferner einen inneren Durchgang (73) aufweist, der durch das gegenüberliegende obere und untere Ende davon schneidet, wobei der innere Durchgang (73) ein unteres Ende davon aufweist, das in Verbindung mit einer Unterseite des Entlastungskanals (122) des inneren Deckelelements (12) angeordnet ist, und ein oberes Ende davon, das fest mit einer flexiblen Endkappe (74) montiert ist, wobei die flexible Endkappe (74) so konfiguriert ist, dass, wenn ein Unterdruck in dem Behälterkörper (2) erzeugt wird, die flexible Endkappe (74) durch den Unterdruck angesaugt wird, um sich nach innen zu krümmen, wobei sie ein Zeichen zeigt, das das Vorhandensein des Unterdrucks anzeigt.

3. Unterdrucklagerbehälter nach Anspruch 2, wobei die flexible Endkappe (74) einen oberen vorstehenden Abschnitt (741) aufweist, der sich in der Mitte ihrer oberen Oberfläche befindet.

4. Unterdruckslagerbehälter nach Anspruch 1, wobei die Drehvorrichtung (3) einen Drehknopf (3) umfasst, der drehbar in dem äußeren Deckelelement (11) des Behälterdeckels (1) angebracht und fest mit der inneren Welle (30) verbunden ist.

5. Unterdrucklagerbehälter nach Anspruch 1, wobei die Drehvorrichtung (3) ein mit der inneren Welle (30) gekoppeltes Motormodul (3), ein mit dem Motormodul (3) elektrisch gekoppeltes Stromversorgungsmodul (32) und ein mit dem Stromversorgungsmodul (32) elektrisch gekoppeltes Schaltsteuermodul (33) zum Steuern des Ein- und Ausschaltens des Motormoduls umfasst.

6. Unterdrucklagerbehälter nach Anspruch 1, wobei das innere Deckelelement (12) einen Entlastungskanal (122) umfasst, der sich an einer Bodenwand (121) desselben befindet, wobei das innere Kunststoffpolsterelement (13) ein Entlastungsloch zur Verbindung mit dem Entlastungskanal (122) umfasst; und
der Unterdrucklagerbehälter ferner eine Entlastungsventilstange (7) mit einem an ihrem unteren Ende angeordneten Dichtungskissen (71) umfasst, wobei die Entlastungsventilstange (7) in dem äußeren Deckelelement (11) angebracht und relativ zu dem äußeren Deckelelement (11) in eine geschlossene Position, in der das Dichtungskissen (71) den Entlastungskanal (122) abdichtet, und eine offene Position, in der das Dichtungskissen (71) von dem Entlastungskanal (122) wegbewegt ist, um eine Verbindung zwischen dem Entlastungskanal (122) und dem Entlastungsloch (132) zu ermöglichen, bewegbar ist.

7. Unterdrucklagerbehälter nach Anspruch 6, wobei das äußere Abdeckelement (11) ein Positionierungsloch (111) aufweist; die Entlastungsventilstange (7) mit ihrem gegenüberliegenden oberen Ende nach oben durch das Positionierungsloch (111) des äußeren Deckelelements (11) eingeführt ist; der Behälterdeckel (1) ferner ein elastisches Element (70) umfasst, das zwischen der Überdruckventilstange (7) und dem Entlastungskanal (122) des inneren Deckelelements (12) angebracht ist, um die Überdruckventilstange (7) in der Position zu halten, in der das Dichtungskissen (71) den Entlastungskanal (122) des inneren Deckelelements (12) abdichtet, wenn ein Unterdruck in dem Behälterkörper (2) erzeugt wird; die Entlastungsventilstange (7) einen äußeren Durchgang (72) aufweist, der so angeordnet ist, dass, wenn die Entlastungsventilstange (7) durch eine äußere Kraft nach unten gedrückt wird, der äußere Durchgang (72) Gas durch den Spalt zwischen dem Dichtungskissen (71) und dem Entlastungskanal (122) des inneren Deckelelements (12) entlastet, und, wenn die äußere Kraft von der Entlastungsventilstange (7) aufgehoben wird, das elastische Element (70) die Entlastungsventilstange (7) sofort nach oben drückt und somit das Dichtungskissen (71) zwingt, den Entlastungskanal (122) abzudichten; die Entlastungsventilstange (7) ferner einen inneren Durchgang (730) aufweist, der durch die gegenüberliegenden oberen und unteren Enden davon schneidet, wobei der innere Durchgang (73) ein unteres Ende davon aufweist, das in Verbindung mit einer unteren Seite des Entlastungskanals (122) des inneren Deckelelements (12) angeordnet ist, und ein oberes Ende davon fest mit einer flexiblen Endkappe (74) montiert ist, wobei die flexible Endkappe (74) so konfiguriert ist, dass, wenn ein Unterdruck in dem Behälterkörper (2) erzeugt wird, die flexible Endkappe (74) durch den Unterdruck angesaugt wird, um sich nach innen zu krümmen, wobei sie ein Zeichen zeigt, das das Vorhandensein des Unterdrucks anzeigt.

8. Unterdrucklagerbehälter nach Anspruch 7, wobei die flexible Endkappe (74) einen oberen vorstehenden Abschnitt aufweist, der sich in der Mitte ihrer Oberseite befindet.

9. Unterdrucklagerbehälter nach Anspruch 6, wobei die Drehvorrichtung (3) einen Drehknopf (3) umfasst, der drehbar in dem äußeren Deckelelement (11) des Behälterdeckels (1) angebracht und fest mit der inneren Welle (30) verbunden ist.

10. Unterdrucklagerbehälter nach Anspruch 6, wobei die Drehvorrichtung (3) ein mit der inneren Welle (30) gekoppeltes Motormodul (3), ein mit dem Motormodul (3) elektrisch gekoppeltes Stromversorgungsmodul (32) und ein mit dem Stromversorgungsmodul (32) elektrisch gekoppeltes Schaltsteuermodul (33) zum Steuern des Ein- und Ausschaltens des Motormoduls (3) umfasst.

11. Unterdrucklagerbehälter nach Anspruch 6, wobei der Getriebezahnradsatz (41) ferner ein großes Zahnrad (412), das koaxial an einer Unterseite des Antriebszahnrads (411) angebracht ist, ein erstes kleines Zahnrad (413), das mit dem großen Zahnrad (412) in Eingriff steht, ein Zwischenzahnrad (414), das koaxial mit dem ersten kleinen Zahnrad (413) verbunden ist, und ein zweites kleines Zahnrad (415), das mit dem Zwischenzahnrad (414) in Eingriff steht, umfasst; das Exzenterrad (42) koaxial mit dem zweiten kleinen Zahnrad (415) verbunden ist und schwenkbar mit dem einen Ende des Verbindungsglieds (43) auf exzentrische Weise gekoppelt ist, wobei das gegenüberliegende Ende des Verbindungsglieds (43) schwenkbar mit dem hin- und hergehenden Kolben (51) gekoppelt ist, und somit, wenn die Drehvorrichtung (3) gedreht wird, der gezahnten Abschnitt (301) der inneren Welle (12) angetrieben wird, um das Antriebszahnrad (411) und das große Zahnrad (412) zu drehen, was bewirkt, dass das große Zahnrad (412) das erste kleine Zahnrad (413) und das Zwischenzahnrad (414) dreht, und das zweite kleine Zahnrad (415) dann durch das Zwischenzahnrad (414) angetrieben wird, um das Exzenterrad (42) zu drehen, was das Verbindungsglied (43) antreibt, um den hin- und hergehenden Kolben (51) hin- und herzubewegen.

## Revendications

1. Récipient de stockage sous pression négative, comprenant :
un corps de récipient (2) comprenant une chambre de stockage avec un côté ouvert et un patin antidérapant (22) monté sur une surface inférieure de celui-ci ;
un couvercle de récipient (1) recouvrant ledit corps de récipient (2), ledit couvercle de récipient (1) comprenant un élément de couvercle extérieur (11) et un élément de couvercle intérieur (12), ledit élément de couvercle extérieur (11) et ledit élément de couvercle intérieur (12) étant fixés ensemble, ledit élément de couvercle intérieur (12) ayant un côté supérieur de celui-ci fixé audit élément de couvercle extérieur (11), ledit élément de couvercle intérieur (12) comprenant un trou d'aspiration situé sur une paroi inférieure (121) de celui-ci, lequel est disposé en communication avec l'espace intérieur dudit corps de récipient (2) après que ledit couvercle de récipient (1) recouvre ledit corps de récipient (2) ;
un dispositif rotatif (3) relié de manière rotative audit élément de couvercle extérieur (11) dudit couvercle de récipient (1), ledit dispositif rotatif comprenant un arbre intérieur (30) fixé de manière fixe à une extrémité inférieure de celui-ci et une partie dentée (301) située à une extrémité distale dudit arbre intérieur (30) et suspendue à l'intérieur dudit élément de couvercle extérieur (11) et apte à entraîner un mécanisme de transmission à engrenages (4) ;
un mécanisme de transmission à engrenages (4) monté à ladite paroi inférieure (121) dudit élément de couvercle intérieur (12) dudit couvercle de récipient (1), ledit mécanisme de transmission à engrenages (4) comprenant un train d'engrenages de transmission (41), une roue excentrique (42) et une bielle (43), ledit train d'engrenages de transmission (41) comprend une roue dentée menante (411) engrenant ladite partie dentée (301) dudit arbre intérieur (30) dudit dispositif rotatif (3) et apte à être entraînée par ledit dispositif rotatif (3) pour faire tourner ladite roue excentrique (42), ladite roue excentrique (42) étant reliée de manière excentrique et pivotante à une extrémité de ladite bielle (43), ladite bielle (43) ayant une extrémité opposée de celle-ci reliée de manière pivotante à un piston à mouvement alternatif (51) d'une pompe à vide (5) ;
une pompe à vide (5) montée à ladite paroi inférieure (121) dudit élément de couvercle intérieur (12) dudit couvercle de récipient (1) et disposée en communication avec ledit trou d'aspiration (1211) dudit élément de couvercle intérieur (12), ladite pompe à vide (5) comprenant un piston à mouvement alternatif (51) apte à être entraîné par ledit mécanisme de transmission à engrenages (4) pour effectuer un mouvement alternatif et en outre aspirer de l'air hors dudit corps de récipient (2) ; et
dans lequel, lorsque ledit dispositif rotatif (3) est amené à tourner par une force externe, ladite partie dentée (301) dudit arbre intérieur (30) est forcée de faire tourner ladite roue dentée menante (411) puis ledit train d'engrenages de transmission (41) dudit mécanisme de transmission à engrenages (4), amenant ladite roue excentrique (42) à déplacer ladite bielle (43) et, en outre, à déplacer de manière alternative ledit piston à mouvement alternatif (51) en aspirant de l'air hors dudit corps de récipient (2) et, ainsi, une pression négative est créée dans ledit corps de récipient (2) ;
**caractérisé par le fait que** ledit couvercle de récipient (1) comprend en outre un élément de coussin intérieur en matière plastique (13), ledit élément de couvercle intérieur (12) étant fait d'une matière plastique et ayant un côté inférieur de celui-ci fixé audit élément de coussin intérieur en matière plastique (13), ledit élément de coussin intérieur en matière plastique (13) comprenant un trou traversant d'aspiration (1211), lequel est disposé en communication avec l'espace intérieur dudit corps de récipient (2) après que ledit couvercle de récipient (1) recouvre ledit corps de récipient (2) ; un ressort d'équilibrage (50) étant monté entre ledit piston à mouvement alternatif (51) et ladite pompe à vide (5) ; et
dans lequel, lorsque la pression négative dans ledit corps de récipient (2) atteint un niveau prédéterminé, ladite paroi inférieure (121) dudit élément de couvercle intérieur (12) en matière plastique dudit couvercle de récipient (1) est forcée de s'incurver dans une direction vers l'intérieur dudit corps de récipient (2) et, ainsi, ledit train d'engrenages de transmission (41) dudit mécanisme de transmission à engrenages (4) est configuré pour être déplacé avec ladite paroi inférieure (121) déformée dudit élément de couvercle intérieur (12) vers l'intérieur dudit corps de récipient (2) pour désengager ladite roue dentée menante (411) vis-à-vis de ladite partie dentée (301) dudit arbre intérieur (30) dudit dispositif rotatif (3), permettant audit dispositif rotatif (3) de tourner à vide.

2. Récipient de stockage sous pression négative selon la revendication 1, dans lequel ledit élément de couvercle intérieur (12) comprend un trou d'aspiration (1211) et un canal de décharge (122) respectivement situés sur une paroi inférieure (121) de celui-ci, ledit élément de coussin intérieur en matière plastique (13) comprenant un trou traversant d'aspiration (131), lequel est disposé en communication avec l'espace intérieur dudit corps de récipient (2) après que ledit couvercle de récipient (1) recouvre ledit corps de récipient (2) ; et un trou de décharge pour communication avec ledit canal de décharge (122), et ledit élément de couvercle extérieur (11) comprend un trou de positionnement (111) ; ladite tige de soupape de décharge (7) a une extrémité supérieure opposée de celle-ci introduite vers le haut à travers ledit trou de positionnement (111) dudit élément de couvercle extérieur (11) ; ledit couvercle de récipient (1) comprend en outre un élément élastique (70) monté entre ladite tige de soupape de décharge (7) et ledit canal de décharge (122) dudit élément de couvercle intérieur (12) pour supporter ladite tige de soupape de décharge (7) dans la position dans laquelle ledit tampon d'étanchéité (71) scelle de manière étanche ledit canal de décharge (122) dudit élément de couvercle intérieur (12) à la création d'une pression négative dans ledit corps de récipient (2) ; ladite tige de soupape de décharge (7) comprend un passage externe (72) agencé de telle sorte que, lorsque ladite tige de soupape de décharge (7) est pressée vers le bas par une force externe, ledit passage externe (72) décharge du gaz à travers l'intervalle entre ledit tampon d'étanchéité (71) et ledit canal de décharge (122) dudit élément de couvercle intérieur (12) et, lorsque la force externe est relâchée de ladite tige de soupape de décharge (7), ledit élément élastique (70) pousse immédiatement ladite tige de soupape de décharge (7) vers le haut, forçant ledit tampon d'étanchéité (71) à sceller de manière étanche ledit canal de décharge (122) ; ladite tige de soupape de décharge (7) comprend en outre un passage interne (73) coupant à travers les extrémités supérieure et inférieure opposées de celle-ci, ledit passage interne (73) ayant une extrémité inférieure de celui-ci disposée en communication avec un côté inférieur dudit canal de décharge (122) dudit élément de couvercle intérieur (12) et une extrémité supérieure de celui-ci à laquelle est monté de manière fixe un bouchon d'extrémité souple (74), ledit bouchon d'extrémité souple (74) étant configuré de telle sorte que, lorsqu'une pression négative est créée dans ledit corps de récipient (2), ledit bouchon d'extrémité souple (74) est aspiré par ladite pression négative pour s'incurver vers l'intérieur, présentant un signe indiquant la présence de ladite pression négative.

3. Récipient de stockage sous pression négative selon la revendication 2, dans lequel ledit bouchon d'extrémité souple (74) comprend une partie supérieure en saillie (741) située au centre d'une surface supérieure de celui-ci.

4. Récipient de stockage sous pression négative selon la revendication 1, dans lequel ledit dispositif rotatif (3) comprend un bouton rotatif (3) monté de manière rotative dans ledit élément de couvercle extérieur (11) dudit couvercle de récipient (1) et relié de manière fixe audit arbre intérieur (30).

5. Récipient de stockage sous pression négative selon la revendication 1, dans lequel ledit dispositif rotatif (3) comprend un module moteur (3) accouplé audit arbre intérieur (30), un module d'alimentation électrique (32) couplé électriquement audit module moteur (3), et un module de commande de commutation (33) couplé électriquement audit module d'alimentation électrique (32) pour commander la marche/arrêt dudit module moteur.

6. Récipient de stockage sous pression négative selon la revendication 1, dans lequel ledit élément de couvercle intérieur (12) comprend un canal de décharge (122) situé sur une paroi inférieure (121) de celui-ci, ledit élément de coussin intérieur en matière plastique (13) comprenant un trou de décharge pour communication avec ledit canal de décharge (122) ; et
le récipient de stockage sous pression négative comprenant en outre une tige de soupape de décharge (7) ayant un tampon d'étanchéité (71) situé à une extrémité inférieure de celle-ci, ladite tige de soupape de décharge (7) étant montée dans ledit élément de couvercle extérieur (11) et déplaçable par rapport audit élément de couvercle extérieur (11) pour être dans une position fermée dans laquelle ledit tampon d'étanchéité (71) scelle de manière étanche ledit canal de décharge (122) et une position ouverte dans laquelle ledit tampon d'étanchéité (71) est à distance dudit canal de décharge (122) pour permettre une communication entre ledit canal de décharge (122) et ledit trou de décharge (132).

7. Récipient de stockage sous pression négative selon la revendication 6, dans lequel ledit élément de couvercle extérieur (11) comprend un trou de positionnement (111) ; ladite tige de soupape de décharge (7) a une extrémité supérieure opposée de celle-ci introduite vers le haut à travers ledit trou de positionnement (111) dudit élément de couvercle extérieur (11) ; ledit couvercle de récipient (1) comprend en outre un élément élastique (70) monté entre ladite tige de soupape de décharge (7) et ledit canal de décharge (122) dudit élément de couvercle intérieur (12) pour supporter ladite tige de soupape de décharge (7) dans la position dans laquelle ledit tampon d'étanchéité (71) scelle de manière étanche ledit canal de décharge (122) dudit élément de couvercle intérieur (12) à la création d'une pression négative dans ledit corps de récipient (2) ; ladite tige de soupape de décharge (7) comprend un passage externe (72) agencé de telle sorte que, lorsque ladite tige de soupape de décharge (7) est pressée vers le bas par une force externe, ledit passage externe (72) décharge du gaz à travers l'intervalle entre ledit tampon d'étanchéité (71) et ledit canal de décharge (122) dudit élément de couvercle intérieur (12) et, lorsque la force externe est relâchée de ladite tige de soupape de décharge (7), ledit élément élastique (70) pousse immédiatement ladite tige de soupape de décharge (7) vers le haut, forçant ledit tampon d'étanchéité (71) à sceller de manière étanche ledit canal de décharge (122) ; ladite tige de soupape de décharge (7) comprend en outre un passage interne (73) coupant à travers les extrémités supérieure et inférieure opposées de celle-ci, ledit passage interne (73) ayant une extrémité inférieure de celui-ci disposée en communication avec un côté inférieur dudit canal de décharge (122) dudit élément de couvercle intérieur (12) et une extrémité supérieure de celui-ci à laquelle est monté de manière fixe un bouchon d'extrémité souple (74), ledit bouchon d'extrémité souple (74) étant configuré de telle sorte que, lorsqu'une pression négative est créée dans ledit corps de récipient (2), ledit bouchon d'extrémité souple (74) est aspiré par ladite pression négative pour s'incurver vers l'intérieur, présentant un signe indiquant la présence de ladite pression négative.

8. Récipient de stockage sous pression négative selon la revendication 7, dans lequel ledit bouchon d'extrémité souple (74) comprend une partie supérieure en saillie située au centre d'une surface supérieure de celui-ci.

9. Récipient de stockage sous pression négative selon la revendication 6, dans lequel ledit dispositif rotatif (3) comprend un bouton rotatif (3) monté de manière rotative dans ledit élément de couvercle extérieur (11) dudit couvercle de récipient (1) et relié de manière fixe audit arbre intérieur (30).

10. Récipient de stockage sous pression négative selon la revendication 6, dans lequel ledit dispositif rotatif (3) comprend un module moteur (3) accouplé audit arbre intérieur (30), un module d'alimentation électrique (32) couplé électriquement audit module moteur (3), et un module de commande de commutation (33) couplé électriquement audit module d'alimentation électrique (32) pour commander la marche/arrêt dudit module moteur (3).

11. Récipient de stockage sous pression négative selon la revendication 6, dans lequel ledit train d'engrenages de transmission (41) comprend en outre une grande roue dentée (412) montée coaxialement sur un côté inférieur de ladite roue dentée menante (411), une première petite roue dentée (413) engrenant ladite grande roue dentée (412), une roue dentée intermédiaire (414) reliée coaxialement à ladite première petite roue dentée (413), et une seconde petite roue dentée (415) engrenant ladite roue dentée intermédiaire (414) ; ladite roue excentrique (42) est reliée coaxialement à ladite seconde petite roue dentée (415) et accouplée de manière pivotante à une extrémité de ladite bielle (43) de manière excentrique, ladite bielle (43) a l'extrémité opposée de celle-ci accouplée de manière pivotante audit piston à mouvement alternatif (51) et, ainsi, lorsque ledit dispositif rotatif (3) est amené à tourner, ladite partie dentée (301) dudit arbre intérieur (12) est entraînée pour faire tourner ladite roue dentée menante (411) et ladite grande roue dentée (412), amenant ladite grande roue dentée (412) à faire tourner ladite première petite roue dentée (413) et ladite roue dentée intermédiaire (414), et ladite seconde petite roue dentée (415) est ensuite entraînée par ladite roue dentée intermédiaire (414) pour faire tourner ladite roue excentrique (42), amenant ladite bielle (43) à déplacer de manière alternative ledit piston à mouvement alternatif (51) .
